# EUROPÄISCHE PATENTSCHRIFT

(11) **EP 3 357 718 B1**
(45) Veröffentlichungstag und Bekanntmachung des Hinweises auf die Patenterteilung: **13.01.2021**
(21) Anmeldenummer: 18155231.6
(22) Anmeldetag: 06.02.2018
(51) Int. Cl.: B60G 13/14, B60G 17/015, B60G 17/02, B60K 1/04, B60K 7/00, B62D 21/00, B60G 21/055, B60W 10/22

(54) **UNIVERSALUNTERBAUGRUPPE FÜR EIN KRAFTFAHRZEUG**
UNIVERSAL SUBMODULE FOR A MOTOR VEHICLE
SOUS-ENSSEMBLE UNIVERSEL POUR UN VÉHICULE AUTOMOBILE

(30) Priorität: 06.02.2017 LU 100067
(43) Veröffentlichungstag der Anmeldung: 08.08.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A1- 2 127 915
- WO-A1-2009/156769
- WO-A2-03/054500
- DE-A1-102009 036 731
- DE-A1-102009 048 818
- DE-A1-102010 037 555
- US-A1- 2003 094 319
- US-A1- 2003 116 374

## Beschreibung

Die Erfindung betrifft eine Universalunterbaugruppe, die Ankoppelelemente zum Ankoppeln von Karosseriebauteilen aufweist, und die mehrere Radaufhängungen aufweist und die vorbereitet ist, um jeweils ein Rad an jeweils einer Radaufhängung aufnehmen zu können, und die wenigstens einen elektrisch angetriebenen Aktuator aufweist, und die einen Energiespeicher aufweist, der den wenigstens einen Aktuator mit Energie versorgt und/oder der dazu ausgebildet ist, einen wenigstens eines der Räder antreibenden Antriebsmotor mit Energie zu versorgen.

Derzeit werden Kraftfahrzeuge großindustriell nach dem Prinzip der selbstragenden Karosserie, die Fahrgestell und Aufbau zu einer Einheit zusammenfasst, hergestellt. In die selbstragende Karosserie werden dann u.a. Antriebsmotor, Getriebe, Radaufhängungen samt Rädern, Lenkung usw. eingebaut.

Die Radaufhängung eines Fahrzeugs ist zumeist dazu ausgebildet, im Fahrbetrieb auftretenden Stößen, die beispielsweise durch Fahrbahnunebenheiten hervorgerufen werden können, durch eine elastisch nachgebende Bewegung des Rades nachzugeben und dazu ein Schwingen des Rades relativ zu einer Fahrzeugkarosserie zu dämpfen. Zu diesem Zweck sind zumeist wenigstens eine mechanische Feder, die oftmals als Schraubenfeder ausgeführt ist, und ein Dämpfer, der oftmals als hydraulischer Dämpfer ausgeführt ist, vorhanden.

Außerdem gibt es Fahrwerke mit aktiven Radaufhängungen, die zur Verbesserung des Seitneigungs- und Wankverhaltens bei Kurvenfahrten und/oder zum Vermeiden oder Reduzieren von Nickbewegungen beim Anfahren oder Bremsen ausgebildet sind.

Aus DE 10 2005 031 036 A1 ist beispielsweise ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb aus Motor und Getriebe und aus einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Außer dem vorgenannten Typ von Stabilisatorsystemen gibt es auch solche Systeme, bei denen jeweils ein aktiver Einzelstabilisator ausschließlich einem Rad zugeordnet ist. Ein solches System hat den Vorteil, dass die Räder einer Achse mit gleichgerichteten Kräften beaufschlagt werden können, um beispielsweise einer Nickbewegung beim Anfahren und/oder Bremsen entgegenwirken zu können. Ein solches System ist beispielsweise aus DE 10 2010 037 180 A1 oder aus DE 10 2010 037 555 A1 bekannt.

Aus DE 10 2009 014 201 A1 ist ein aktives elektromechanisches Federungssystem für ein Fahrwerk eines Kraftfahrzeuges mit einer ersten und einer zweiten Achse für jeweils zwei sich gegenüberliegende Räder bekannt. Der ersten Achse sind jeweils für die gegenüberliegenden Räder Federbeine mit Federbeinaktuatoren zugeordnet. Der zweiten Achse sind jeweils für die gegenüberliegenden Räder Federanordnungen mit Rotationsaktuatoren zugeordnet.

US 2003/009 431 9 A1 offenbart einen austauschbaren Fahrzeugkörper, der einen Gastank als Energiespeicher beinhaltet.

Es ist daher die Aufgabe der vorliegenden Erfindung, eine Grundlage für einen einfacheren und sichereren Herstellungsprozess eines Kraftfahrzeugs anzugeben, die eine kostengünstige Herstellung von Fahrzeugen mit besseren Fahreigenschaften und dabei mit besserem Sicherheitsniveau ermöglicht.

Die Aufgabe wird durch eine Universalunterbaugruppe gelöst, die dadurch gekennzeichnet, dass der Aktuator als elektromechanischer Dämpfer fungiert und/oder als elektromechanisches Federelement fungiert und/oder Teil eines aktiven Wank- und/oder Nickstabilisators ist und dass die Universalunterbaugruppe wenigstens eine Elektronikeinheit aufweist, die den Aktuator steuert oder regelt und die redundant oder mehrfach redundant und in Bezug auf Software und/oder Hardware voneinander autonom den sicheren Zustand der Unterbaugruppe überwacht.

Die Erfindung hat den ganz besonderen Vorteil, dass ganz unterschiedliche Fahrzeuge auf der Basis jeweils der gleichen Universalunterbaugruppe hergestellt werden können. Insbesondere können ganz unterschiedliche Aufbauten montiert werden. Insbesondere kann die Universalunterbaugruppe auch aufwendige Komponenten, wie beispielsweise Komponenten, die zum autonomen Fahren erforderlich sind, beinhalten. Da die Anforderungen an solche Komponenten und an deren Zusammenwirken, insbesondere auch von gesetzgeberischer Seite sehr hoch sind, würde sich eine entsprechende Entwicklung für Kleinserienfahrzeuge nicht lohnen, wohingegen es die vorliegende Erfindung ermöglicht, auch für ein Kleinserienfahrzeug die gleiche, insbesondere in Großserie hergestellte, erfindungsgemäße Universalunterbaugruppe, um so sämtlich Funktionen, insbesondere auch Funktionen, deren Entwicklung sich für eine Kleinserie nicht lohnen würde, zu nutzen.

Bei einer vorteilhaften Ausführung weist die Universalunterbaugruppe wenigstens einen elektrischen Antriebsmotor auf, der wenigstens eines der Räder antreibt und der elektrisch an den Energiespeicher angeschlossen ist. Insbesondere kann der Antriebsmotor ein Radnabenmotor sein. Ganz besonders vorteilhaft ist eine Ausführung, bei der jedem Rad ein eigener Antriebsmotor, insbesondere ein eigener Radnabenmotor, zugeordnet ist.

Der Energiespeicher kann beispielsweise ein Akku sein oder mehrere Akkus aufweisen. Alternativ oder zusätzlich kann auch vorgesehen sein, dass der Energiespeicher einen Wasserstofftank aufweist und dass die Universalunterbaugruppe eine Brennstoffzelle beinhaltet.

Bei einer besonders vorteilhaften Ausführung weist die Universalunterbaugruppe wenigstens eine Bremse auf. Insbesondere kann es sich um eine elektrisch betätigbare Bremse handeln, deren Betätigungsvorrichtung von dem Energiespeicher mit Energie versorgt wird. Die Bremse kann beispielsweise eine Feststellbremse sein. Es ist auch möglich, dass die Bremse eine Betriebsbremse ist. Insbesondere können vorteilhaft sowohl eine Feststellbremse, als auch eine Betriebsbremse vorhanden sein.

Bei einer vorteilhaften Ausführung beinhaltet die Universalunterbaugruppe eine Vorderradlenkung und/oder eine Hinterradlenkung. Insbesondere kann vorgesehen sein, dass die Vorderradlenkung und/oder die Hinterradlenkung einen elektrisch angetriebenen Lenkungsaktuator aufweist. Der Lenkungsaktuator kann insbesondere Teil einer Lenkkraftunterstützungsvorrichtung sein. Alternativ oder zusätzlich ist es auch möglich, dass der Lenkungsaktuator Teil einer Überlagerungslenkung ist. Der Lenkungsaktuator dient bei einer solchen Ausführung dazu, den von einem Fahrer ausgeübten Lenkbewegungen zusätzliche Lenkbewegungen zu überlagern.

Insbesondere kann der Lenkungsaktuator Teil einer Steer-by-wire Lenkung ohne mechanischen Durchgriff sein.

Bei einer ganz besonders vorteilhaften Ausführung ist die Universalunterbaugruppe für sich gesehen selbsttragend ausgebildet. Dies hat den besonderen Vorteil, dass die Universalunterbaugruppe als Einheit, insbesondere auf ihren Rädern rollend, transportiert werden kann. Insbesondere kann die Universalunterbaugruppe alternativ oder zusätzlich als eigenständiges Modul ausgebildet sein.

Die Universalunterbaugruppe kann wenigstens einen Sensor aufweisen, wobei der Sensor beispielsweise ein Beschleunigungssensor oder ein Höhenstandssensor sein kann. Der Höhenstandssensor kann in den Aktuator integriert sein und/oder in einem Aktuatorgehäuse des Aktuators angeordnet sein. Derartige Sensoren können insbesondere Messwerte erfassen, die für eine Wank- und/oder Nickstabilisierung oder zum Regeln des als elektromechanischer Dämpfer und/oder elektromechanisches Federelement fungierenden Aktuators nötig sind.

Es ist auch möglich, dass die Universalunterbaugruppe wenigstens einen Sensor aufweist, der dazu ausgebildet ist, die Umgebung eines mit der Universalunterbaugruppe versehenen Fahrzeugs zu erfassen. Der Sensor kann beispielsweise ein optischer Sensor oder ein Radarsensor sein. Insbesondere kann vorteilhaft vorgesehen sein, dass die Universalunterbaugruppe die für ein ganz oder teilweise autonomes Fahren erforderlichen Sensoren beinhaltet. Beispielsweise kann die Universalunterbaugruppe einen Abstandssensor zum Ermitteln des Abstandes zu einem vorderen oder hinteren Fahrzeug aufweisen.

Bei einer besonders sicheren und zuverlässigen Ausführung weist die Universalunterbaugruppe zusätzlich zu dem wenigstens einen Sensor wenigstens einen Redundanzsensor auf der direkt oder indirekt dieselbe Messgröße ermittelt, wie der wenigstens eine Sensor. Für den Fall, dass sich widersprechende Messwerte ermittelt werden kann vorteilhaft vorgesehen sein, dass eine Warnmeldung ausgegeben wird und/oder dass in einen sicheren Modus umgeschaltet wird. Der sichere Modus kann derart realisiert sein, dass, beispielsweise durch Aktuatoren, Stellwerte eingestellt werden, die einen sicheren Betrieb gewährleisten, wobei insbesondere der Funktionsumfang reduziert sein kann.

Insbesondere kann die Elektronikeinheit den Antriebsmotor für wenigstens eines der Räder und/oder den Aktuator und/oder den Lenkungsaktuator auf der Basis der von den Sensoren erhaltenen Signale, insbesondere ganz oder teilweise autonom, steuern.

Erfindungsgemäß ist vorgesehen, dass die Universalunterbaugruppe eine Elektronikeinheit aufweist. Insbesondere ist die Elektronikeinheit dazu ausgebildet und eingerichtet, den Aktuator und/oder den Antriebsmotor zu steuern oder zu regeln.

Beispielsweise kann die Elektronikeinheit dazu ausgebildet sein, eine Rekuperation zu steuern und Bremsenergie von dem Antriebsmotor an den Energiespeicher zu übertragen. Es ist auch möglich, dass die über den als elektromechanischen Dämpfer fungierenden Aktuator eingetragene Energie zu nutzen, indem der Aktuator, wenn er als Dämpfer fungiert, die eingetragene mechanische Energie in elektrische Energie umwandelt und an den Energiespeicher überträgt. Allerdings ist es in der Praxis so, dass der Aktuator zumeist mit elektrischen Strom versorgt werden muss, da der Energiebedarf für die Wank- und/oder Nickstabilisierung und/oder die Federfunktion in aller Regel größer ist, als der mögliche Energierückgewinn durch die Dämpferfunktion. Im Ergebnis kann der Aktuator jedoch vorteilhaft derart ausgebildet sein, dass durch eine zusätzliche Dämpferfunktion der Nettoenergiebedarf gegenüber einem Aktuator ohne Dämpferfunktion verringert ist.

Insbesondere kann vorteilhaft vorgesehen sein, dass die Elektronikeinheit Sensorsignale von wenigstens einem Sensor der Universalunterbaugruppe empfängt.

Die Elektronikeinheit weist vorzugsweise wenigstens eine Elektronikschnittstelle zum Ankoppeln weiterer Komponenten auf. Hierbei kann es sich insbesondere im Hinblick auf eine einfache und breitgefächerte Verwendbarkeit der Universalunterbaugruppe um eine standardisierte Schnittstelle handeln.

Erfindungsgemäß überwacht die Elektronikeinheit edundant oder mehrfach redundant und in Bezug auf Software und/oder Hardware voneinander autonom den sicheren Zustand der Unterbaugruppe. Insbesondere kann alternativ oder zusätzlich vorteilhaft vorgesehen sein, dass die Elektronikeinheit den sicheren Zustand der Unterbaugruppe unter Berücksichtigung von externen Signalen überwacht, die sie von Fahrzeugkomponenten außerhalb der Unterbaugruppe empfängt. Es ist insbesondere möglich, dass alle sicherheitsrelevanten Funktionen und Sensorsignale redundant und aber auch eigenständig voneinander berechnet und plausibilisiert werden. Vorzugsweise geht die Unterbaugruppe und/oder das Fahrzeug, das eine erfindungsgemäße Unterbaugruppe beinhaltet, bei Abweichungen oder sich widersprechenden Messwerten in einem Alarmmodus und/oder einen den sicheren Zustand. Da ein solches System mit redundanten und/oder parallelen und/oder unabhängigen Mess- und Regelgeräten sehr großen Hard- und Softwareaufwand erfordert, ist die Verwendung der erfindungsgemäßen, ggf. einheitlichen Universalunterbaugruppe, die in Großserie herstellbar ist und für ganz unterschiedliche Fahrzeuge verwendbar ist, sowohl im Hinblick auf eine zuverlässige technische Umsetzbarkeit, als auch in wirtschaftlicher Hinsicht besonders vorteilhaft.

Wie bereits erwähnt kann die Elektronikeinheit den Aktuator bei einer besonderen Ausführung derart steuern, dass der Aktuator zusätzlich als elektromechanischer Dämpfer fungiert, der Schwingungen des Rades relativ zu einer Fahrzeugkarosserie dämpft. Alternativ oder zusätzlich kann auch vorgesehen sein, dass die Elektronikeinheit den Aktuator derart steuert, dass der Aktuator zusätzlich als elektromechanisches Federelement fungiert, das bei im Fahrbetrieb auftretenden Stößen eine elastisch nachgebende Bewegung des Rades zulässt.

Soweit der Aktuator dazu ausgebildet ist, als elektromechanischer Dämpfer zu fungieren, kann auf Bauelemente, wie hydraulische Stoßdämpfer und/oder großvolumige Schraubenfedern vollständig verzichtet werden. Insbesondere besteht der ganz besondere Vorteil, dass Funktionalitäten typischer Bauelemente, wie z.B. hydraulische Stoßdämpfer und/oder großvolumige Federelemente in einem Aktuator, insbesondere modulartig, zusammengefasst werden können. Neben dem weiteren, weiter unten im Detail genannten Vorteil, fahrsituationsabhängig oder fahrbahnabhängig flexibel unterschiedliche Federungs- und/oder Dämpfungsmodi einstellen zu können, hat die Erfindung insbesondere den Vorteil, dass Bauraum eingespart wird, weil insgesamt weniger Bauteile benötigt werden.

Insbesondere kann der Aktuator zusätzlich zu einer Funktion für eine Wank- und/oder Nickstabilisierung derart aktiv angesteuert sein, dass er zusätzlich eine Federfunktion und/oder eine Dämpferfunktion wahrnimmt. Insbesondere kann vorteilhaft vorgesehen sein, dass den Ansteuersignalen für eine Wank- und/oder Nickstabilisierung zusätzlich Ansteuersignale für die Federfunktion und/oder die Dämpferfunktion überlagert werden.

Hinsichtlich der Federfunktion hat eine Ausführung, bei der der Aktuator als elektromechanisches Federelement fungiert, den ganz besonderen Vorteil, dass die Federkonstante fahrsituationsabhängig und/oder fahrbahnabhängig ohne wesentliche Zeitverzögerung verändert werden kann. Gleiches gilt analog für die Dämpferfunktion.

Wenn der Aktuator als elektromechanisches Federelement fungiert, hat dies den besonderen Vorteil, dass die Universalunterbaugruppe und deren Radaufhängungen ohne zusätzliche, viel Bauraum beanspruchende, hydraulische Stoßdämpfer und/oder Schraubenfedern auskommt, so dass der nicht mehr zur Integration solcher Bauelemente benötigte Bauraum beispielsweise zur Vergrößerung des Ladevolumens des auf der Basis der Universalunterbaugruppe hergestellten Fahrzeugs oder für andere Aggregate zur Verfügung stehen kann.

Insoweit kann vorteilhaft vorgesehen sein, dass die Universalunterbaugruppe außer dem Aktuator keinen weiteren Dämpfer, insbesondere keinen hydraulischen Stoßdämpfer oder Reibungsdämpfer oder Luftfederdämpfer, aufweist, der ein Schwingen eines Rades relativ zu einer Fahrzeugkarosserie dämpft. Insbesondere sind die bei der Universalunterbaugruppe vorhandenen Dämpfer und Federelemente derart ausgelegt, dass beim Herstellen eine Fahrzeugs auf der Basis der Universalunterbaugruppe keine weiteren Federn oder Dämpfer eingebaut, insbesondere zusätzlich parallel oder in Reihe geschaltet, werden müssen.

Es ist jedoch nicht grundsätzlich ausgeschlossen, dass die Universalunterbaugruppe außer dem Aktuator wenigstens ein weiteres Dämpferelement aufweist. Insbesondere kann ein solcher zusätzlicher Dämpfer kleiner und damit platzsparender ausgebildet sein, als bei einer herkömmlichen Radaufhängung.

Analog kann - alternativ oder zusätzlich - vorteilhaft vorgesehen sein, dass die Universalunterbaugruppe außer dem Aktuator kein weiteres Federelement aufweist, das bei im Fahrbetrieb auftretenden Stößen eine elastisch nachgebende Bewegung des Rades zulässt. Es ist jedoch nicht grundsätzlich ausgeschlossen, dass die aktive Radaufhängung außer dem Aktuator wenigstens ein weiteres Federelement aufweist.

Bei einer besonderen Ausführung weist die Universalunterbaugruppe außer dem Aktuator wenigstens ein weiteres Federelement auf, das bei im Fahrbetrieb auftretenden Stößen eine elastisch nachgebende Bewegung des Rades zulässt. Das zusätzliche, weitere Federelement kann insbesondere dazu dienen, ein vorgegebenes oder vorgebbares Grundgewicht einer Fahrzeugkarosserie abzustützen, so dass der Aktuator zur Abstützung dieses Grundgewichts nicht aktiv bestromt werden muss. Auf diese Weise kann Energie eingespart werden. Hierbei kann vorteilhaft insbesondere vorgesehen sein, dass der Aktuator hinsichtlich seiner Federfunktion so gesteuert wird, dass er das Gewicht der Zuladung im Fahrbetrieb federnd abstützt.

Das weitere Federelement kann relativ zu dem Aktuator wirktechnisch in Reihe geschaltet sein. Alternativ ist es auch möglich, dass das weitere Federelement zu dem Aktuator wirktechnisch parallelgeschaltet ist.

Es ist auch möglich, dass mehrere weitere Federelemente vorhanden sind. Beispielsweise kann vorteilhaft vorgesehen sein, dass ein weiteres Federelement mit dem Aktuator wirktechnisch in Reihe geschaltet ist, während ein anderes weiteres Federelement zu dem Aktuator wirktechnisch parallel geschaltet ist.

Bei einer besonderen Ausführung gibt es zwei weitere Federelemente, wobei ein Federelement als Torsionsstab oder Torsionsrohr ausgebildet ist, das dem Aktuator triebtechnisch nachgeschaltet, also mit dem Aktuator wirktechnisch in Reihe geschaltet, ist, während das andere weitere Federelement beispielsweise als Schraubenfeder oder als Schenkelfeder ausgeführt ist, die zu dem Aktuator wirktechnisch parallelgeschaltet ist.

Das weitere Federelement kann insbesondere eine mechanische Feder sein. Insbesondere kann vorteilhaft vorgesehen sein, dass das weitere Federelement eine Torsionsfeder oder ein Torsionsfederrohr oder eine Torsionsfederstange aufweist. Es ist auch möglich, dass das weitere Federelement eine Schraubenfeder oder eine Spiralfeder aufweist. Bei einer besonders platzsparenden Ausführung ist das weitere Federelement als Schenkelelement ausgeführt.

Der Aktuator kann insbesondere in der Weise ausgebildet sein, dass er einen elektrisch angetriebenen Aktuatormotor und ein dem Aktuatormotor triebtechnisch nachgeschaltetes Getriebe aufweist. Das Getriebe kann vorteilhaft ein Spannungswellengetriebe sein.

Bei einer vorteilhaften Ausführung weist die Universalunterbaugruppe eine Elektronikeinheit zur Aufzeichnung von Fahrdaten (Black Box) auf.

Besonders gut transportierbar ist eine erfindungsgemäße Universalunterbaugruppe, an deren Radaufhängungen bereits Räder montiert sind.

Von besonderem Vorteil ist ein Fahrzeug, das eine erfindungsgemäße Universalunterbaugruppe beinhaltet. Das Fahrzeug kann insbesondere ein Elektrofahrzeug, insbesondere ein reines Elektrofahrzeug, sein. Insbesondere kann das Fahrzeug ein Personenkraftwagen sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:

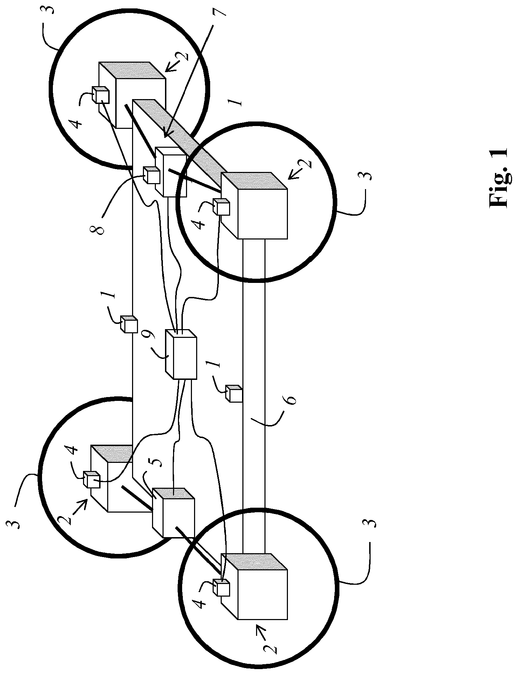

- Fig. 1: ein ganz schematisch dargestelltes Ausführungsbeispiel einer erfindungsgemäßen Universalunterbaugruppe.

Fig. 1 zeigt ein Ausführungsbeispiel einer erfindungsgemäßen Universalunterbaugruppe. Die Universalunterbaugruppe weist Ankoppelelemente 1 zum Ankoppeln von Karosseriebauteilen auf. Die Universalunterbaugruppe weist außerdem mehrere, an jeweils einer Radaufhängung 2 angeordnete Räder 3 auf.

Die Universalunterbaugruppe weist mehrere elektrisch angetriebene Aktuatoren 4 auf, die jeweils als elektromechanischer Dämpfer und als elektromechanisches Federelement fungieren und die darüber hinaus Teil eines aktiven Wank und/oder Nickstabilisators sind.

Die Universalunterbaugruppe weist darüber hinaus einen Energiespeicher 6 auf, der die Aktuatoren 4 mit Energie versorgt. Die Universalunterbaugruppe weist außerdem einen elektrischen Antriebsmotor 5 auf, der zwei der Räder antreibt und der elektrisch an den Energiespeicher 6 angeschlossen ist und aus dem Energiespeicher 6 elektrische Energie zum Bewirken eines Vortriebs bezieht.

Die Universalunterbaugruppe weist darüber eine Vorderradlenkung 7 auf. Die Vorderradlenkung 7 hat einen elektrisch angetriebenen Lenkungsaktuator 8, der Teil einer Lenkkraftunterstützungsvorrichtung und einer Überlagerungslenkung ist. Auch der Lenkungsaktuator 8 bezieht elektrische Energie von dem Energiespeicher 6.

Die Universalunterbaugruppe weist außerdem eine Elektronikeinheit 9 auf. Der Antriebsmotor 5, die Aktuatoren 4 und der Lenkungsaktuator 8 sind mittels Kabeln an die Elektronikeinheit 9 angeschlossen und werden über diese gesteuert.

### Bezugszeichenliste:

- 1: Ankoppelelemente
- 2: Radaufhängung
- 3: Räder
- 4: Aktuatoren
- 5: Antriebsmotor
- 6: Energiespeicher
- 7: Vorderradlenkung
- 8: Lenkungsaktuator
- 9: Elektronikeinheit

## Patentansprüche

1. Universalunterbaugruppe, die Ankoppelelemente zum Ankoppeln von Karosseriebauteilen aufweist, und die mehrere Radaufhängungen aufweist und die vorbereitet ist, um jeweils ein Rad an jeweils einer Radaufhängung aufnehmen zu können, und die wenigstens einen elektrisch angetriebenen Aktuator aufweist, und die einen Energiespeicher aufweist, der den wenigstens einen Aktuator mit Energie versorgt und/oder der dazu ausgebildet ist, einen wenigstens eines der Räder antreibenden Antriebsmotor mit Energie zu versorgen, **dadurch gekennzeichnet, dass** der Aktuator als elektromechanischer Dämpfer fungiert und/oder als elektromechanisches Federelement fungiert und/oder Teil eines aktiven Wank- und/oder Nickstabilisators ist und dass die Universalunterbaugruppe eine Elektronikeinheit aufweist, die den Aktuator steuert oder regelt und die redundant oder mehrfach redundant und in Bezug auf Software und/oder Hardware voneinander autonom den sicheren Zustand der Unterbaugruppe überwacht.

2. Universalunterbaugruppe nach Anspruch 1, **dadurch gekennzeichnet, dass** die Universalunterbaugruppe wenigstens einen elektrischen Antriebsmotor aufweist, der wenigstens eines der Räder antreibt und der elektrisch an den Energiespeicher angeschlossen ist.

3. Universalunterbaugruppe nach Anspruch 1 oder 2, **dadurch gekennzeichnet, dass**
a. der Energiespeicher ein Akku ist oder mehrere Akkus aufweist, und/oder dass
b. der Energiespeicher einen Wasserstofftank aufweist und/oder dass die Universalunterbaugruppe eine Brennstoffzelle aufweist.

4. Universalunterbaugruppe nach einem der Ansprüche 1 bis 3, **dadurch gekennzeichnet, dass**
a. die Universalunterbaugruppe wenigstens eine Bremse aufweist, oder dass
b. die Universalunterbaugruppe wenigstens eine Bremse aufweist, wobei die Bremse elektrisch betätigbar ist oder dass die die Bremse elektrisch betätigbar ist und eine Betätigungsvorrichtung der Bremse von dem Energiespeicher mit Energie versorgt wird, oder dass
c. die Universalunterbaugruppe wenigstens eine Bremse aufweist, wobei die Bremse eine Feststellbremse ist oder dass
d. die Universalunterbaugruppe wenigstens eine Bremse aufweist, wobei die Bremse eine Betriebsbremse ist.

5. Universalunterbaugruppe nach einem der Ansprüche 1 bis 4, **dadurch gekennzeichnet, dass**
a. die Universalunterbaugruppe eine Vorderradlenkung aufweist, und/oder dass
b. die Universalunterbaugruppe eine Hinterradlenkung aufweist.

6. Universalunterbaugruppe nach Anspruch 5, **dadurch gekennzeichnet, dass**
a. die Vorderradlenkung und/oder die Hinterradlenkung einen elektrisch angetriebenen Lenkungsaktuator aufweist, und/oder dass
b. die Vorderradlenkung und/oder die Hinterradlenkung einen elektrisch angetriebenen Lenkungsaktuator aufweist, der Teil einer Lenkkraftunterstützungsvorrichtung ist, und/oder dass
c. die Vorderradlenkung und/oder die Hinterradlenkung einen elektrisch angetriebenen Lenkungsaktuator aufweist, der Teil einer Überlagerungslenkung ist, und/oder dass
d. die Vorderradlenkung und/oder die Hinterradlenkung einen elektrisch angetriebenen Lenkungsaktuator aufweist, der Teil einer Steer-by-wire Lenkung ohne mechanischen Durchgriff ist.

7. Universalunterbaugruppe nach einem der Ansprüche 1 bis 6, **dadurch gekennzeichnet, dass** die Universalunterbaugruppe als für sich gesehen selbsttragend ausgebildet ist und/oder dass die Universalunterbaugruppe als eigenständiges Modul ausgebildet ist.

8. Universalunterbaugruppe nach einem der Ansprüche 1 bis 7, **dadurch gekennzeichnet, dass**
a. die Universalunterbaugruppe wenigstens einen Sensor aufweist, oder dass
b. die Universalunterbaugruppe wenigstens einen Sensor aufweist, der ein Beschleunigungssensor ist, oder dass
c. die Universalunterbaugruppe wenigstens einen Sensor aufweist, der dazu ausgebildet ist, die Umgebung eines mit der Universalunterbaugruppe versehenen Fahrzeugs zu erfassen.
d. die Universalunterbaugruppe wenigstens einen Sensor aufweist, der ein Höhenstandssensor ist.
e. die Universalunterbaugruppe wenigstens einen Sensor aufweist, ein Höhenstandssensor ist und der in den Aktuator integriert ist und/oder in einem Aktuatorgehäuse des Aktuators angeordnet ist, oder dass
f. die Universalunterbaugruppe einen Abstandssensor zum Ermitteln des Abstandes zu einem vorderen oder hinteren Fahrzeug aufweist, oder dass
g. die Universalunterbaugruppe für ein ganz oder teilweise autonomes Fahren erforderliche Sensoren beinhaltet.
h. die Universalunterbaugruppe wenigstens einen Sensor und zusätzlich zu dem wenigstens einen Sensor wenigstens einen Redundanzsensor aufweist, der direkt oder indirekt dieselbe Messgröße ermittelt, wie der wenigstens eine Sensor, oder dass
i. die Universalunterbaugruppe wenigstens einen Sensor und eine Elektronikeinheit aufweist, die den Antriebsmotor für wenigstens eines der Räder und/oder den Aktuator und/oder den Lenkungsaktuator auf der Basis der von den Sensoren erhaltenen Signale, insbesondere ganz oder teilweise autonom, steuert.

9. Universalunterbaugruppe nach einem der Ansprüche 1 bis 8, **dadurch gekennzeichnet, dass** der Antriebsmotor ein Radnabenmotor ist und/oder dass jedem Rad ein eigener Antriebsmotor, insbesondere ein eigener Radnabenmotor, zugeordnet ist.

10. Universalunterbaugruppe nach einem der Ansprüche 1 bis 9, **dadurch gekennzeichnet, dass**
a. die Elektronikeinheit den sicheren Zustand der Unterbaugruppe unter Berücksichtigung von externen Signalen, die sie von Fahrzeugkomponenten außerhalb der Unterbaugruppe empfängt, überwacht, oder dass
b. die Elektronikeinheit den Antriebsmotor steuert oder regelt, oder dass
c. die Elektronikeinheit dazu ausgebildet ist, eine Rekuperation zu steuern und Bremsenergie von dem Antriebsmotor an den Energiespeicher zu übertragen, oder dass
d. die Elektronikeinheit Sensorsignale von wenigstens einem Sensor der Universalunterbaugruppe empfängt, oder dass
e. die Elektronikeinheit eine Elektronikschnittstelle zum Ankoppeln weiterer Komponenten aufweist, oder dass
f. die Elektronikeinheit zur Aufzeichnung von Fahrdaten ausgebildet ist.

11. Universalunterbaugruppe nach Anspruch 10, **dadurch gekennzeichnet, dass**
a. die Elektronikeinheit den Aktuator derart steuert, dass der Aktuator zusätzlich als elektromechanischer Dämpfer fungiert, der Schwingungen des Rades relativ zu einer Fahrzeugkarosserie dämpft, und/oder dass
b. die Elektronikeinheit den Aktuator derart steuert, dass der Aktuator zusätzlich als elektromechanischer Dämpfer fungiert, und dass die Universalunterbaugruppe außer dem als elektromechanischer Dämpfer fungierenden Aktuator oder außer mehreren als elektromechanische Dämpfer fungierenden Aktuatoren keinen weiteren Dämpfer, insbesondere keinen Stoßdämpfer oder hydraulischen Stoßdämpfer oder Reibungsstoßdämpfer oder Luftfederdämpfer, aufweist, der ein Schwingen der Rades relativ zu einer Fahrzeugkarosserie dämpft, und/oder dass
c. die Elektronikeinheit den Aktuator derart steuert, dass der Aktuator zusätzlich als elektromechanisches Federelement fungiert, das bei im Fahrbetrieb auftretenden Stößen eine elastisch nachgebende Bewegung des Rades zulässt, und/oder dass
d. die Elektronikeinheit den Aktuator derart steuert, dass der Aktuator zusätzlich als elektromechanisches Federelement fungiert, das bei im Fahrbetrieb auftretenden Stößen eine elastisch nachgebende Bewegung des Rades zulässt, wobei die Universalunterbaugruppe außer dem als elektromechanisches Federelement fungierenden Aktuator oder außer mehreren als elektromechanische Federelemente fungierenden Aktuatoren kein weiteres Federelement aufweist, das bei im Fahrbetrieb auftretenden Stößen eine elastisch nachgebende Bewegung des Rades zulässt, und/oder dass
e. die Elektronikeinheit den Aktuator derart steuert, dass der Aktuator zusätzlich als elektromechanischer Dämpfer fungiert, der elektrischen Strom erzeugt und an den Energiespeicher überträgt.

12. Universalunterbaugruppe nach Anspruch 10, **dadurch gekennzeichnet, dass**
a. die Elektronikeinheit den Aktuator derart steuert, dass der Aktuator zusätzlich als elektromechanisches Federelement fungiert, das bei im Fahrbetrieb auftretenden Stößen eine elastisch nachgebende Bewegung des Rades zulässt und die Universalunterbaugruppe außer dem Aktuator wenigstens ein weiteres Federelement aufweist, das bei im Fahrbetrieb auftretenden Stößen eine elastisch nachgebende Bewegung der Rades zulässt, oder dass
b. die Elektronikeinheit den Aktuator derart steuert, dass der Aktuator zusätzlich als elektromechanisches Federelement fungiert, das bei im Fahrbetrieb auftretenden Stößen eine elastisch nachgebende Bewegung des Rades zulässt und die Universalunterbaugruppe außer dem Aktuator wenigstens ein weiteres Federelement aufweist, das bei im Fahrbetrieb auftretenden Stößen eine elastisch nachgebende Bewegung der Rades zulässt, wobei das weitere Federelement mit dem Aktuator wirktechnisch in Reihe geschaltet ist, oder dass
c. die Elektronikeinheit den Aktuator derart steuert, dass der Aktuator zusätzlich als elektromechanisches Federelement fungiert, das bei im Fahrbetrieb auftretenden Stößen eine elastisch nachgebende Bewegung des Rades zulässt und die Universalunterbaugruppe außer dem Aktuator wenigstens ein weiteres Federelement aufweist, das bei im Fahrbetrieb auftretenden Stößen eine elastisch nachgebende Bewegung der Rades zulässt, wobei das weitere Federelement zu dem Aktuator wirktechnisch parallel geschaltet ist.

13. Universalunterbaugruppe nach einem der Ansprüche 1 bis 12, **dadurch gekennzeichnet, dass**
a. der Aktuator einen elektrisch angetriebenen Aktuatormotor und ein dem Aktuatormotor triebtechnisch nachgeschaltetes Getriebe aufweist, oder dass
b. der Aktuator aus einem elektrisch angetriebenen Aktuatormotor und ein dem Aktuatormotor triebtechnisch nachgeschalteten Getriebe besteht.

14. Fahrzeug beinhaltend wenigstens eine Universalunterbaugruppe nach einem der Ansprüche 1 bis 13.

15. Fahrzeug nach Anspruch 14, **dadurch gekennzeichnet, dass** das Fahrzeug ein Elektrofahrzeug, insbesondere ein reines Elektrofahrzeug, ist und/oder dass das Fahrzeug ein Personenkraftwagen ist.

## Claims

1. Universal sub-module which has coupling elements for coupling of body components, and which has a plurality of wheel suspensions and which is prepared for being able to receive in each case one wheel on each wheel suspension, and which has at least one electrically driven actuator, and which has an energy accumulator which supplies the at least one actuator with energy and/or is configured for supplying energy to a drive motor that drives at least one of the wheels, **characterized in that** the actuator functions as an electromechanical damper and/or functions as an electromechanical spring element and/or is part of an active roll and/or pitch stabilizer, and **in that** the universal sub-module has an electronics unit which in an open-loop or closed-loop manner controls the actuator and which, by redundancy or multiple redundancies, and autonomously in terms of software and/or hardware, monitors the safe state of the sub-module.

2. Universal sub-module according to Claim 1, **characterized in that** the universal sub-module has at least one electric drive motor which drives at least one of the wheels and which is electrically connected to the energy accumulator.

3. Universal sub-module according to Claim 1 or 2, **characterized in that**
a) the energy accumulator is a rechargeable battery or has a plurality of rechargeable batteries; and/or **in that**
b) the energy accumulator has a hydrogen tank and/or **in that** the universal sub-module has a fuel cell.

4. Universal sub-module according to one of Claims 1 to 3, **characterized in that**
a) the universal sub-module has at least one brake; or **in that**
b) the universal sub-module has at least one brake, wherein the brake is electrically activatable; or **in that** the brake is electrically activatable, and an activation device of the brake is supplied with energy from the energy accumulator; or **in that**
c) the universal sub-module has at least one brake, wherein the brake is a parking brake; or **in that**
d) the universal sub-module has at least one brake, wherein the brake is a service brake.

5. Universal sub-module according to one of Claims 1 to 4, **characterized in that**
a) the universal sub-module has a front wheel steering system; and/or **in that**
b) the universal sub-module has a rear wheel steering system.

6. Universal sub-module according to Claim 5, **characterized in that**
a) the front wheel steering system and/or the rear wheel steering system have/has an electrically driven steering actuator; and/or **in that**
b) the front wheel steering system and/or the rear wheel steering system have/has an electrically driven steering actuator which is part of a power steering device; and/or **in that**
c) the front wheel steering system and/or the rear wheel steering system have/has an electrically driven steering actuator which is part of a superimposed steering system; and/or **in that**
d) the front wheel steering system and/or the rear wheel steering system have/has an electrically driven steering actuator which is part of a steer-by-wire steering system without any mechanical engagement.

7. Universal sub-module according to one of Claims 1 to 6, **characterized in that** the universal sub-module per se is configured so as to be self-supporting, and/or **in that** the universal sub-module is configured as a stand-alone module.

8. Universal sub-module according to one of Claims 1 to 7, **characterized in that**
a) the universal sub-module has at least one sensor; or **in that**
b) the universal sub-module has at least one sensor which is an acceleration sensor; or **in that**
c) the universal sub-module has at least one sensor which is configured for detecting the environment of a vehicle provided with the universal sub-module;
d) the universal sub-module has at least one sensor which is a ride height sensor;
e) the universal sub-module has a sensor which is a ride height sensor and which is integrated in the actuator and/or is disposed in an actuator housing of the actuator; or **in that**
f) the universal sub-module has a distance sensor for determining the distance from a vehicle in front or behind; or **in that**
g) the universal sub-module includes sensors required for fully or partially autonomous driving;
h) the universal sub-module has at least one sensor and, in addition to the at least one sensor, has at least one redundancy sensor which directly or indirectly determines the same measured variable as the at least one sensor; or **in that**
i) the universal sub-module has at least one sensor and an electronics unit which based on the signals received from the sensors controls, in particular in a fully or partially autonomous manner, the drive motor for at least one of the wheels and/or the actuator and/or the steering actuator.

9. Universal sub-module according to one of Claims 1 to 8, **characterized in that** the drive motor is a wheel hub motor, and/or **in that** each wheel is assigned a dedicated drive motor, in particular a dedicated wheel hub motor.

10. Universal sub-module according to one of Claims 1 to 9, **characterized in that**
a) the electronics unit monitors the safe state of the sub-module while taking into account external signals which said electronics unit receives from vehicle components that are external to the sub-module; or **in that**
b) the electronics unit in an open-loop or closed-loop manner controls the drive motor; or **in that**
c) the electronics unit is configured for controlling a recuperation and for transmitting braking energy from the drive motor to the energy accumulator; or **in that**
d) the electronics unit receives sensor signals from at least one sensor of the universal sub-module; or **in that**
e) the electronics unit has an electronics interface for coupling further components; or **in that**
f) the electronics unit is configured for recording driving data.

11. Universal sub-module according to Claim 10, **characterized in that**
a) the electronics unit controls the actuator in such a manner that the actuator additionally functions as an electromechanical damper which damps vibrations of the wheel relative to a vehicle body; and/or **in that**
b) the electronics unit controls the actuator in such a manner that the actuator additionally functions as an electromechanical damper, and **in that** the universal sub-module, apart from the actuator that functions as an electromechanical damper, or apart from a plurality of actuators that function as electromechanical dampers, does not have any further damper, in particular no shock absorber or hydraulic shock absorber or friction shock absorber or air-spring damper which damps a vibration of the wheel relative to a vehicle body; and/or **in that**
c) the electronics unit controls the actuator in such a manner that the actuator additionally functions as an electromechanical spring element which in the event of shocks arising in the driving operation permits an elastically yielding movement of the wheel; and/or **in that**
d) the electronics unit controls the actuator in such a manner that the actuator additionally functions as an electromechanical spring element which in the event of shocks arising in the driving operation permits an elastically yielding movement of the wheel, wherein the universal sub-module, apart from the actuator that functions as an electromechanical spring element, or apart from a plurality of actuators that function as electromechanical springs elements, does not have any further spring element which in the event of shocks arising in the driving operation permits an elastically yielding movement of the wheel; and/or **in that**
e) the electronics unit controls the actuator in such a manner that the actuator additionally functions as an electromechanical damper which generates the electric current and transmits said electric current to the energy accumulator.

12. Universal sub-module according to Claim 10, **characterized in that**
a) the electronics unit controls the actuator in such a manner that the actuator additionally functions as an electromechanical spring element which in the event of shocks arising in the driving operation permits an elastically yielding movement of the wheel, and the universal sub-module, apart from the actuator, has at least one further spring element which in the event of shocks arising in the driving operation permits an elastically yielding movement of the wheel; or **in that**
b) the electronics unit controls the actuator in such a manner that the actuator additionally functions as an electromechanical spring element which in the event of shocks arising in the driving operation permits an elastically yielding movement of the wheel, and the universal sub-module, apart from the actuator, has at least one further spring element which in the event of shocks arising in the driving operation permits an elastically yielding movement of the wheel, wherein the further spring element is operatively connected in series with the actuator; or **in that**
c) the electronics unit controls the actuator in such a manner that the actuator additionally functions as an electromechanical spring element which in the event of shocks arising in the driving operation permits an elastically yielding movement of the wheel, and the universal sub-module, apart from the actuator, has at least one further spring element which in the event of shocks arising in the driving operation permits an elastically yielding movement of the wheel, wherein the further spring element is operatively connected in parallel with the actuator.

13. Universal sub-module according to one of Claims 1 to 12, **characterized in that**
a) the actuator has an electrically driven actuator motor and a gearbox which in terms of the drivetrain is disposed downstream of the actuator motor; or **in that**
b) the actuator is composed of an electrically driven actuator motor and a gearbox which in terms of the drivetrain is disposed downstream of the actuator motor.

14. Vehicle including at least one universal sub-module according to one of Claims 1 to 13.

15. Vehicle according to Claim 14, **characterized in that** the vehicle is an electric vehicle, in particular a pure electric vehicle; and/or **in that** the vehicle is a passenger motor vehicle.

## Revendications

1. Sous-ensemble universel qui présente des éléments d'accouplement pour accoupler des pièces de carrosserie, et qui présente plusieurs suspensions de roue, et qui est préparé pour pouvoir recevoir respectivement une roue au niveau d'une suspension de roue respectivement, et qui présente au moins un actionneur à entraînement électrique, et qui présente un accumulateur d'énergie qui alimente en énergie ledit au moins un actionneur et/ou qui est réalisé pour alimenter en énergie un moteur d'entraînement entraînant au moins l'une des roues, **caractérisé en ce que** l'actionneur sert d'amortisseur électromécanique et/ou sert d'élément ressort électromécanique et/ou fait partie d'un stabilisateur actif de roulis et/ou de tangage, et **en ce que** le sous-ensemble universel présente une unité électronique qui commande ou régule l'actionneur et qui surveille l'état sûr du sous-ensemble de manière redondante ou plusieurs fois redondante et en termes de logiciel et/ou de matériel de manière autonome l'un de l'autre.

2. Sous-ensemble universel selon la revendication 1, **caractérisé en ce que** le sous-ensemble universel présente au moins un moteur d'entraînement électrique qui entraîne au moins l'une des roues et qui est connecté électriquement à l'accumulateur d'énergie.

3. Sous-ensemble universel selon la revendication 1 ou 2, **caractérisé en ce que**
a. l'accumulateur d'énergie est un accumulateur ou présente plusieurs accumulateurs, et/ou **en ce que**
b. l'accumulateur d'énergie présente un réservoir d'hydrogène et/ou **en ce que** le sous-ensemble universel présente une pile à combustible.

4. Sous-ensemble universel selon l'une quelconque des revendications 1 à 3, **caractérisé en ce que**
a. le sous-ensemble universel présente au moins un frein, ou **en ce que**
b. le sous-ensemble universel présente au moins un frein, le frein pouvant être actionné électriquement, ou **en ce que** le frein peut être actionné électriquement et un dispositif d'actionnement du frein est alimenté en énergie par l'accumulateur d'énergie, ou **en ce que**
c. le sous-ensemble universel présente au moins un frein, le frein étant un frein de stationnement, ou **en ce que**
d. le sous-ensemble universel présente au moins un frein, le frein étant un frein de service.

5. Sous-ensemble universel selon l'une quelconque des revendications 1 à 4, **caractérisé en ce que** a. le sous-ensemble universel présente une direction de roue avant, et/ou **en ce que** b. le sous-ensemble universel présente une direction de roue arrière.

6. Sous-ensemble universel selon la revendication 5, **caractérisé en ce que**
a. la direction de roue avant et/ou la direction de roue arrière présentent un actionneur de direction à entraînement électrique, et/ou **en ce que**
b. la direction de roue avant et/ou la direction de roue arrière présentent un actionneur de direction à entraînement électrique qui fait partie d'un dispositif de direction assistée, et/ou **en ce que**
c. la direction de roue avant et/ou la direction de roue arrière présentent un actionneur de direction à entraînement électrique qui fait partie d'une direction à superposition, et/ou **en ce que**
d. la direction de roue avant et/ou la direction de roue arrière présentent un actionneur de direction à entraînement électrique qui fait partie d'une direction par commande électronique sans connexion mécanique.

7. Sous-ensemble universel selon l'une quelconque des revendications 1 à 6, **caractérisé en ce que** le sous-ensemble universel en tant que tel est réalisé de manière indépendante, et/ou **en ce que** le sous-ensemble universel est réalisé comme un module autonome.

8. Sous-ensemble universel selon l'une quelconque des revendications 1 à 7, **caractérisé en ce que**
a. le sous-ensemble universel présente au moins un capteur, ou **en ce que**
b. le sous-ensemble universel présente au moins un capteur qui est un capteur d'accélération, ou **en ce que**
c. le sous-ensemble universel présente au moins un capteur qui est réalisé pour détecter l'environnement d'un véhicule équipé du sous-ensemble universel,
d. le sous-ensemble universel présente au moins un capteur qui est un capteur de hauteur de châssis,
e. le sous-ensemble universel présente au moins un capteur qui est un capteur de hauteur de châssis et qui est intégré dans l'actionneur et/ou est disposé dans un boîtier d'actionneur de l'actionneur, ou **en ce que**
f. le sous-ensemble universel présente un capteur de distance pour déterminer la distance par rapport à un véhicule avant ou arrière, ou **en ce que**
g. le sous-ensemble universel comprend des capteurs nécessaires à la conduite entièrement ou partiellement autonome,
h. le sous-ensemble universel présente au moins un capteur et en plus dudit au moins un capteur au moins un capteur redondant qui détermine directement ou indirectement la même grandeur de mesure que ledit au moins un capteur, ou **en ce que**
i. le sous-ensemble universel présente au moins un capteur et une unité électronique qui commande, en particulier de manière entièrement ou partiellement autonome, le moteur d'entraînement pour au moins l'une des roues et/ou l'actionneur et/ou l'actionneur de direction sur la base des signaux obtenus des capteurs.

9. Sous-ensemble universel selon l'une quelconque des revendications 1 à 8, **caractérisé en ce que** le moteur d'entraînement est un moteur sur moyeu de roue, et/ou **en ce que** chaque roue est associée à son propre moteur d'entraînement, en particulier à son propre moteur sur moyeu de roue.

10. Sous-ensemble universel selon l'une quelconque des revendications 1 à 9, **caractérisé en ce que**
a. l'unité électronique surveille l'état sûr du sous-ensemble en tenant compte de signaux externes qu'elle reçoit de composants de véhicule à l'extérieur du sous-ensemble, ou **en ce que**
b. l'unité électronique commande ou régule le moteur d'entraînement, ou **en ce que**
c. l'unité électronique est réalisée pour commander une récupération et pour transférer de l'énergie de freinage du moteur d'entraînement à l'accumulateur d'énergie, ou **en ce que**
d. l'unité électronique reçoit des signaux de capteur d'au moins un capteur du sous-ensemble universel, ou **en ce que**
e. l'unité électronique présente une interface électronique pour accoupler d'autre composants, ou **en ce que**
f. l'unité électronique est réalisée pour enregistrer des données de conduite.

11. Sous-ensemble universel selon la revendication 10, **caractérisé en ce que**
a. l'unité électronique commande l'actionneur de telle sorte que l'actionneur sert en outre d'amortisseur électromécanique qui amortit les vibrations de la roue par rapport à une carrosserie de véhicule, et/ou **en ce que**
b. l'unité électronique commande l'actionneur de telle sorte que l'actionneur sert en outre d'amortisseur électromécanique, et **en ce qu'**en dehors de l'actionneur servant d'amortisseur électromécanique ou en dehors de plusieurs actionneurs servant d'amortisseurs électromécaniques, le sous-ensemble universel ne présente aucun autre amortisseur supplémentaire, en particulier aucun amortisseur de chocs ni amortisseur de chocs hydraulique ni amortisseur de chocs à friction ni amortisseur pneumatique, qui amortit une vibration de la roue par rapport à une carrosserie de véhicule, et/ou **en ce que**
c. l'unité électronique commande l'actionneur de telle sorte que l'actionneur sert en outre d'élément ressort électromécanique qui permet un mouvement élastiquement flexible de la roue en cas de chocs se produisant pendant la marche, et/ou **en ce que**
d. l'unité électronique commande l'actionneur de telle sorte que l'actionneur sert en outre d'élément ressort électromécanique qui permet un mouvement élastiquement flexible de la roue en cas de chocs se produisant pendant la marche, le sous-ensemble universel ne présentant aucun élément ressort supplémentaire qui permet un mouvement élastiquement flexible en cas de chocs se produisant pendant la marche en dehors de l'actionneur servant d'élément ressort électromécanique ou en dehors de plusieurs actionneurs servant d'éléments ressorts électromécaniques, et/ou **en ce que**
e. l'unité électronique commande l'actionneur de telle sorte que l'actionneur sert en outre d'amortisseur électromécanique qui génère du courant électrique et le transfère à l'accumulateur d'énergie.

12. Sous-ensemble universel selon la revendication 10, **caractérisé en ce que**
a. l'unité électronique commande l'actionneur de telle sorte que l'actionneur sert en outre d'élément ressort électromécanique qui permet un mouvement élastiquement flexible de la roue en cas de chocs se produisant pendant la marche, et le sous-ensemble universel présente en dehors de l'actionneur au moins un élément ressort supplémentaire qui permet un mouvement élastiquement flexible de la roue en cas de chocs se produisant pendant la marche, ou **en ce que**
b. l'unité électronique commande l'actionneur de telle sorte que l'actionneur sert en outre d'élément ressort électromécanique qui permet un mouvement élastiquement flexible de la roue en cas de chocs se produisant pendant la marche, et le sous-ensemble universel présente en dehors de l'actionneur au moins un élément ressort supplémentaire qui permet un mouvement élastiquement flexible de la roue en cas de chocs se produisant pendant la marche, l'élément ressort supplémentaire étant de manière fonctionnelle connecté en série avec l'actionneur, ou **en ce que**
c. l'unité électronique commande l'actionneur de telle sorte que l'actionneur sert en outre d'élément ressort électromécanique qui permet un mouvement élastiquement flexible de la roue en cas de chocs se produisant pendant la marche, et le sous-ensemble universel présente en dehors de l'actionneur au moins un élément ressort supplémentaire qui permet un mouvement élastiquement flexible de la roue en cas de chocs se produisant pendant la marche, l'élément ressort supplémentaire étant de manière fonctionnelle connecté en parallèle avec l'actionneur.

13. Sous-ensemble universel selon l'une quelconque des revendications 1 à 12, **caractérisé en ce que**
a. l'actionneur présente un moteur d'actionneur à entraînement électrique et une transmission placée en aval du moteur d'actionneur concernant l'entraînement, ou **en ce que**
b. l'actionneur est composé d'un moteur d'actionneur à d'entraînement électrique et d'une transmission placée en aval du moteur d'actionneur concernant l'entraînement.

14. Véhicule, comprenant au moins un sous-ensemble universel selon l'une quelconque des revendications 1 à 13.

15. Véhicule selon la revendication 14, **caractérisé en ce que** le véhicule est un véhicule électrique, en particulier un véhicule purement électrique, et/ou **en ce que** le véhicule est une voiture particulière.
